(19) Europäisches Patentamt / European Patent Office / Office européen des brevets

(11) **EP 3 786 534 B1**

(12) **EUROPEAN PATENT SPECIFICATION**

(45) Date of publication and mention
of the grant of the patent:
**11.10.2023 Bulletin 2023/41**

(21) Application number: **20179066.4**

(22) Date of filing: **29.06.2016**

(51) International Patent Classification (IPC):
**F24D 13/02** (2006.01)  **C04B 41/00** (2006.01)
**C04B 41/48** (2006.01)  **C04B 41/83** (2006.01)
**H05B 3/26** (2006.01)

(52) Cooperative Patent Classification (CPC):
(C-Sets available)
**C04B 41/483; C04B 41/009; C04B 41/4884;
C04B 41/83; F24D 13/024; H05B 3/265;
Y02B 30/00** (Cont.)

(54) **COATED CERAMIC PLATES, COUPLING ELEMENTS FOR FLOORING, AND USES THEREOF**

BESCHICHTETE KERAMIKPLATTEN, KOPPLUNGSELEMENTE FUR FUSSBODEN UND
VERWENDUNGEN DAVON

PLAQUES CERAMIQUES REVETUES, ELEMENTS D'ACCOUPLEMENT POUR PLANCHER ET
LEURS UTILISATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2015 PT 2015108603
30.06.2015 PT 2015108625**

(43) Date of publication of application:
**03.03.2021 Bulletin 2021/09**

(62) Document number(s) of the earlier application(s) in
accordance with Art. 76 EPC:
**16753699.4 / 3 318 540**

(73) Proprietors:
• **Revigrés - Indústria De Revestimentos De Grés,
LDA
3754-001 Barrô (Águeda) (PT)**
• **CENTITVC - Centro de Nanotecnologia e
Materiais Tecnicos, Funcionais e Inteligentes
4760-034 Vila Nova de Famalicão (PT)**

(72) Inventors:
• **DA SILVA SOUSA, Juliana Patrícia
4515-114 Foz do Sousa (Gondomar) (PT)**
• **DA SILVA SAMPAIO E PORTELA, Ana Rute
4785-588 Trofa (PT)**
• **DA FONSECA E BRANQUINHO DE PAIS
MONTEIRO, Joana
3520-058 Nelas (PT)**
• **SANTOS MARINHO SILVA, Carla Joana
4715-343 Braga (PT)**
• **GUEDES SÃO MARCOS, Pedro Miguel
3800-043 Aveiro (PT)**
• **MEIRA GONÇALVES, António Miguel
4770-277 Joane (PT)**
• **BENTO MONTES, Ana Rita
8500-500 Portimão (PT)**
• **OLIVEIRA DA SILVA, José Fernando
4445 Alfena (PT)**
• **DE CARVALHO GOMES, João Manuel
4700-832 Ruílhe (Braga) (PT)**

(74) Representative: **Patentree
Edificio Net
Rua de Salazares, 842
4149-002 Porto (PT)**

(56) References cited:
**WO-A2-2014/122419  DE-A1-102006 041 775
GB-A- 1 457 869  US-A1- 2008 039 552
US-A1- 2012 168 427  US-A1- 2014 001 170**

**(Cont. next page)**

(52) Cooperative Patent Classification (CPC): (Cont.)

C-Sets
**C04B 41/009, C04B 33/00;**
**C04B 41/483, C04B 14/24;**
**C04B 41/4884, C04B 14/24**

**Description**

**Technical domain**

The present description relates to a ceramic plate coated with a polymeric material doped with hollow microspheres, to the obtaining method and use thereof, in particular in the construction field. Said plate provides the user with thermal comfort when contact between the plantar surface of the feet and the ceramic material occurs, by decreasing the cold sensation.

In order to improve cold feeling decrease by the user, the present description further relates to ceramic coating plates with printed and encapsulated heating elements interconnected between plates by means of coupling elements, in particular a ring and heating systems, use thereof, in particular in the construction field. Said coupling elements guarantee an easy functionalization of ceramic plates in particular for heating purposes.

**Background**

Currently, several electrical heating systems are available in the market (based on the Joule effect) for integrating into structures and construction/finishing materials, with particular emphasis to the flooring/radiant flooring applications (in sandwich material). Typically, these heating systems are made up of resistive elements (wire or metal wire windings as copper and/or aluminum) encapsulated in polymer or textile structures (physical coatings), which are then placed under the surface of flooring or wall coatings structures.

Specifically, the application of heater bands in ceramic slabs is referenced in WO 2007/100181 A1, wherein the construction of a heated floor panel of simplified application is described. This panel consists of a ceramic plate, where a heating element made of printed conductive inks and arranged between two PET layers, is subsequently attached to the inside face of the ceramic plate. Under the heating element lies an adiabatic layer for thermal insulation. The Thermofoil Underfloor Heating® product is an example of the use of this technology for floor heating application and offers products with 100 and 150 W/m$^2$ with different dimensions. On the other hand, another referred technique is to directly print said heating element in the inside face of the plate, while keeping the adiabatic plate at the base.

In US 8306408, a resistive material is applied by "thermal spray" with the desired pattern onto a substrate which may be placed beneath the upper flooring, e.g., of concrete. The resistive material works as a resistor in the heating circuit and, by applying masks, this circuit may be designed with several shapes.

US 8461486 B2 discloses a ceramic slab consisting of an upper and lower substrate and a heating module. The module includes two electrodes and a heating element, which in this case includes a layer structure of carbon nanotubes; EP 1427255 A2 discloses an electric heating module within a slab with a composite body made of clay and cement, with the heating element enclosed within one of the surfaces; CN203320899 (U) -*E tile module* discloses an electric heating membrane with a thermal insulation layer as the product formation.

Typically, the printed heating circuits are constituted by parallel paste strips of low resistance carbon bodies (heating elements) and silver strips (perpendicular to those of carbon), which act to both associate in parallel heating elements and convey electric current to the carbon strip terminals. One example is provided by BVF Heating Solutions which has created the Caleo product based on systems printed onto flexible films to promote various solutions for establishing an energy saving heating system. In order to print such systems, functional inks (including inks of different electrical conductivities) are available in the market specifically formulated for screen printing, noting that this method is the primary printing process approached in this study.

Some developments aiming at making ceramic coatings more thermally pleasant have been carried out in the literature. Technical efforts have been directed at changing the porosity of ceramic coatings, since a porous microstructure in a ceramic material is important to achieve a favorable thermal condition, due to pores containing air or other gas (with low thermal conductivity) within, ensuring a low thermal conductivity of the final product. Pereira et al. have developed ceramic coatings with low density, thereby obtaining thermally comfortable coatings. The authors have succeeded in creating a porous structure on the ceramic coatings, changing the raw materials and the production conditions of these materials.

In a study by Effting, Güths and Alarcon, the authors sought to assess, based on thermal and mechanical properties, the thermal comfort of ceramic coatings prepared from refractory materials (waste from porcelain polishing process) applied by powder atomization industrial. The obtained results showed that a higher porosity and surface roughness of the ceramic coatings cause improvements in comfort to touch. This study also demonstrated that an increase in the porosity of the ceramic coating decreases its mechanical strength.

Several works discussing the application of PCMs in buildings aiming at shaping the energy efficiency thereof have been known in the literature, with these materials being used in construction so as to reduce environmental impact - US20120090812, US 20040170806. However, there are no known studies substantiating the use of such ceramic materials for thermal comfort to touch. US 20110012054 A1 refers to the incorporation of low density materials, such as hollow glass microspheres in a binding agent, so as to produce materials with thermal comfort to touch properties, for outdoor applications. In this case, the binding agent is a two-component epoxy system, or cement-, urea- or urethane-based system, and the developed material may be processed into different types of floor plates.

Document US2014/001170A1 discloses a system and method for a heatable floor or wall covering having a decorative visible surface layer, for example marble or other natural stone. The heatable wall or floor covering includes at least one surface treatment panel, the at least one panel having at least a bottom layer, a heat module layer, and a surface material layer. The heat module layer includes at least one electrically conductive pathway, and the bottom layer includes at least one tab and at least one receiver, each tab and receiver located on a lateral surface of the bottom layer and including an electrical connector in contact with an electrically conductive pathway. US2014/001170A1 itself does not disclose any coupling element for flooring coating plates with printed and encapsulated heating elements interconnected between plates by means of said coupling elements.

DE102006041775A1 relates to a heating device which can be inserted into a hardenable material bed such as tile adhesive, mortar, screed and the like and is inexpensive to produce, an electrical heating device comprising a heating foil with a heating current-carrying layer of a resistance material, wherein the heating foil has a plurality of perforations. D2 further relates to a method for producing the heating device according to the invention, to a method for laying such heating devices and to a rail which is laid together with such heating devices. DE102006041775A1 itself does not disclose any printed heating elements interconnected between plates.

US2012/168427A1 discloses a carpet assembly capable of generating heat comprises a plurality of polygonal base plates and a plurality of connectors. Each polygonal base plate has a power connector part provided at each periphery of the polygonal base plate, a heat generation device, and a power connection line. The power connection line is connected with the power connector part and the heat generation device, so that when the power connection line is connected with an external power, the power connector part and heat generation device are in electric connection via the power connection line, and the heat generation device begins to produce heat. US2012/168427A1 discloses a carpet assembly capable of generating heat, in particular not disclosing coupling element for flooring coating plates with printed and encapsulated heating elements interconnected between plates.

WO2014/122419A2 discloses a heating element formed as a laminate including a thermally conductive substrate having a first surface coated at least in part with an electrically insulating coating layer. The electrically insulating layer is backed with an electrically resistive layer, formed of a nonconducting matrix material that is loaded with conductive material to allow current to be passed through the resistive material to generate heat which can be conducted out through the thermally conductive substrate. An electrically and thermally insulating layer backs layer and direct heat through the second surface and to provide support and encapsulation to the resistive element of the system. WO2014/122419A2 itself does not disclose any coupling element, in particular not disclosing a ceramic coating plate with printed and encapsulated heating elements interconnected between plates by means of coupling elements.

GB1457869A relates to a method of imparting non-skid or anti-slip properties to a surface. According to GB1457869A there is provided a method of imparting non-skid or anti-slip properties to a surface comprising applying to said surface a matrix material having hollow particles incorporated therein and thereafter breaking and/ or removing at least some of the particles at the surface of the matrix material. GB1457869A discloses a method of imparting non-skid or anti-slip properties to a surface, in particular not disclosing a coupling element for flooring coating plates with printed and encapsulated heating elements.

US2008/039552A1 discloses a low density component, such as hollow microspheres, dispersed in a binder to produces a material having a surface that is comfortable to the touch even after extended exposure to an energy source, such as direct sun light. US2008/039552A1 discloses a low-density component but itself does not disclose a coupling element for flooring coating plates with printed and encapsulated heating elements. These facts are described to illustrate the technical problem solved by the embodiments of the present document.

**General Description**

In order to solve the above mentioned technical problems and avoid deficiencies related to the above solutions, plates maximizing the feeling of comfort of the end user and the development of solutions allowing the heating of ceramic plates inside buildings are still desirable.

The present description relates to a ceramic plate coated with a polymeric material doped with hollow microspheres, to the obtaining method and uses thereof, in particular in the construction field. In particular, a ceramic plate with polymeric coating, wherein the polymeric coating comprises at least one polymer and up to 30% (m/m) of hollow glass microspheres with a size inferior to 90 microns, that allows the reduction of a cold feeling. The plates with the coatings described herein have improved the thermal impact and resisted etching of different acids and of different bases, while still maintaining the values of mechanical strength and water absorption.

In order to improve cold feeling, the present description further relates to ceramic coating plates with printed and encapsulated heating elements interconnected between plates by means of coupling elements, in particular a ring and heating systems, use thereof, in particular in the construction field. These coupling elements guarantee an easy functionalization of ceramic plates in particular for heating purposes.

Another aspect of the present invention relates to ceramic coating plates with printed and encapsulated heating elements interconnected between plates by means of coupling elements, in particular a ring and heating systems, use thereof, in particular in the construction field and also to novel plates with acrylic coating. Thus, the ceramic plates and the heating system of the present disclosure intend to improve the heating of ceramic solutions and the user comfort sensation.

Another aspect of the present invention relates to a coupling element for flooring coating plates comprising a ceramic plate, an electric circuit and an insulating substrate, namely an insulating polymeric substrate with a recess for receiving said coupling element, wherein said element comprises: a conductive segment; a coating of the conductive segment using an electrically insulating polymeric material; two resilient and conductive protrusions connected to the conductive segment for interconnecting two coating plates.

In one embodiment, the coupling element may comprise four resilient and conductive protrusions connected to said conductive segment for interconnecting four coating plates.

According to the invention the coupling element may comprise an additional conductive element and comprises four resilient and conductive protrusions connected pairwise to said conductive segments for interconnecting four coating plates pairwise.

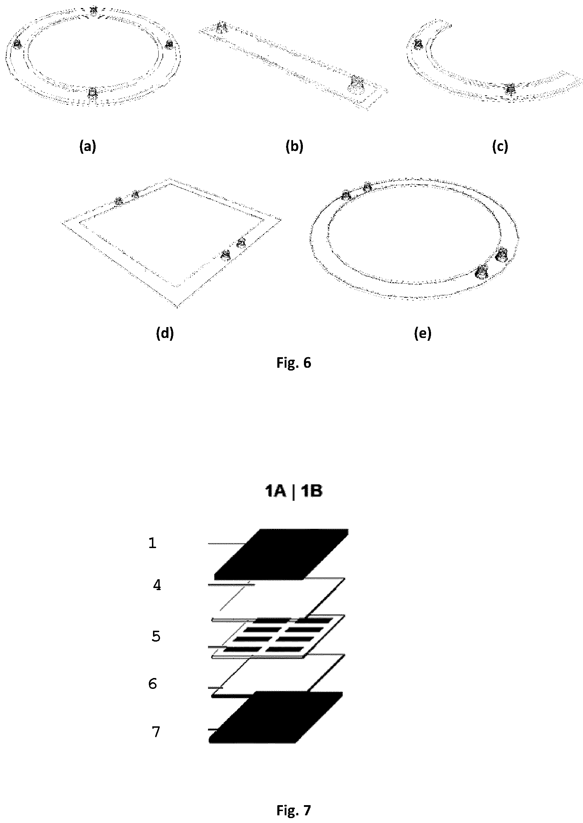

In one embodiment of the coupling element, the conductive segment may have the shape of a ring, strip, half-ring, square, cross, among others (see Figure 6).

In one embodiment of the coupling element, wherein the resilient and conductive protrusions of the conductive element may be metallic.

In one embodiment of the coupling element, the resilient and conductive protrusions of the coupling element may be coil springs.

According to the invention the connecting element may further comprise a frustoconical base for supporting each protrusion.

According to the invention the frustoconical base of the protrusion base of the connecting element may be made of the same material as the conductive segment coating.

In one embodiment, wherein the material of the conductive segment of the connecting element may be made of copper.

Another aspect of the present description relates to a coating plate for flooring comprising a ceramic plate, an electric circuit and an insulating substrate, in particular a polymer or cork, having a recess for receiving a coupling element, wherein said recess exposes one or more electric circuit contacts.

In another embodiment of the coating plate, the insulating substrate, in particular a polymer or cork, may comprise 4 recesses, each one for receiving a coupling element for coupling with the 4 neighboring plates of the coating plate, wherein each recess exposes one or more electric circuit contacts.

In another embodiment of the coating plate, the 4 recesses may be located at the 4 corners of the coating plate.

In another embodiment of the coating plate, each one of the recesses may have the shape of a quarter ring whose ends coincide with two sides of the coating plate.

In another embodiment of the coating plate, the insulating substrate, in particular a polymer or cork, may comprise, for each of the electrical contacts exposed by the recess, a recess for receiving an electrically conductive protrusion of said coupling element.

In another embodiment of the covering plate, the recess may be frustoconical.

The coating plate may be a tile, a ceramic, a mosaic, a paving block or a slab.

Another aspect of the present application refers to the heating system comprising a coupling element for the floor coating plates described, and at least two floor coating plates described; wherein the coupling element interconnects the electric circuit of said plates, and wherein the electrical circuit of said plates is a heating circuit.

In one embodiment, the ceramic slab is fired and rectified by milling so as to prepare the surface for the positioning of the printed polymeric film as a heating element. It is then encapsulated by an insulating layer and fixed by an adhesive. The insulating layer may be previously milled with a hole for allowing the fitting of the ring and access to the bus bar of the heating element. Access to the printed element allows the connection to the main power supply.

In one embodiment, the coupling element for coating plates, in particular the fixing ring, may comprise a solid conductive element made of copper in the form of a rim containing four metal springs welded on four opposite points on the circumference and coated by an insulating polymer, in particular an injected elastomer polymer. The plastic surroundings ensure the tightness of the conductive rim, as well as the perimeter of the springs, in conical shape, causing the milled hole in the above insulating layer to be covered.

In one embodiment, the power supply to terminals of each slab can be performed by a bus rail perpendicular to the length of the heating circuits.

In one embodiment, the system may incorporate a heating element, and an insulating layer to the heating element. Integration in the ceramic plates may include a differentiating factor regarding the connection system between slabs, with electrical conductivity, thus feeding an electric heating system to the inside face of the slabs, and being of easy assembly.

The present disclosure also describes a system that allows the management of the energy within a slab floor, by controlling and monitoring the integrated heating systems and the surrounding environment, thus taking advantage of its capacity and thermal inertia of the material. The integration process of heating systems in the slab and electronic thereof, for signal reception and transmission, can be drawn with existing conventional technology.

These systems allow a decrease in energy consumption by eliminating accessory heating equipment, as well as an easy application on any rectified floor, still contributing to well-being and air quality.

The heating systems are developed using techniques that permit the direct printing of circuits with materials with different electrical resistances (or with controlled circuit total resistance).

In one embodiment, substrates for printing are flexible, allowing the use of a roll-to-roll (R2R) production thereof.

In one embodiment, the heating system, or specifically, each piece of ceramic slab, is connected via a distribution unit to the terminals of each slab assembly line, communicating with the central module for temperature management by area of control. This central module may communicate with a home automation system or mobile device, allowing the user to set temperature profiles for each environment, set heating schedules, check issuing alerts if abnormal situations are detected, read realtime temperature and/or moisture parameters, remotely control the system and monitor consumption.

The connecting elements of the present document enable interconnecting several ceramic plates while maintaining the mechanical strength and flexibility inherent to a floor and still allowing the passage of electrical connections. Thus, this technology allows the functionalization of ceramic plates without changing the mounting/production system thereof.

The present disclosure also describes coatings for ceramic plates with different characteristics, for use in residential areas where this type of material is not commonly used, due to the poor thermal comfort perception associated with this type of product. To improve comfort, the coupling system may also be applied and the plate may be adapted to said coupling system.

Ceramic coatings when applied in building interiors, cause a cold perception and feeling mainly due to its high thermal conductivity. In view of the foregoing, a coating for a ceramic plate has been developed which improves the thermal comfort perception of ceramic coatings, while maintaining the chemical and mechanical properties of the coatings (such as mechanical strength) without rapid wear.

The main advantages of the polymeric coating for ceramic plates and plates comprising these coatings are as follows:

- The disclosed ceramic coatings have good chemical and water absorption resistance.
- The ceramic coatings coated with the polymer solutions doped with hollow glass microspheres are more thermally comfortable as compared to a wood sample.

One aspect of the present invention refers to a ceramic plate with polymeric coating, wherein the polymeric coating comprises at least one polymer and up to 30% (m/m) of hollow glass microspheres with a size inferior to 90 microns. Wherein the use of this polymeric coating allows surprisingly improving user comfort feeling.

In one embodiment for enhanced results, the amount of microspheres ranges 3-30% (m/m), preferably the amount of microspheres ranges 5-25% (m/m), even more preferably 8- 15% (m/m), even more preferably the amount of microspheres ranges 9-11% (m/m), in particular 9-10% (m/m).

In one embodiment for enhanced results, the hollow microspheres can have an outer diameter of 5-70 microns, preferably an outer diameter of 10-65 microns, in particular an outer diameter of 20-50 microns.

In one embodiment for enhanced results, the hollow microspheres may be soda-lime borosilicate glass.

In one embodiment for enhanced results, the hollow microspheres may comprise a true density of 0.15-0.30 $g/cm^3$, preferably comprise a true density of 0.19 - 0.25 $g/cm^3$. The true density is obtained at 25 $\underline{o}$C by means of a pycnometer and is calculated by the formula D = (b-a)/(d-a) - (c-b), wherein a is the mass in grams of the empty pycnometer, b is the mass in grams of the pycnometer filled with microspheres, c is the mass in grams of the pycnometer filled with microspheres (b) plus water, and d is the mass in grams of the pycnometer filled with water.

In one embodiment for enhanced results, the ratio between the diameter of the hollow spheres and wall thickness may range from 0.5-1 microns, preferably 0.7-0.8 microns.

In one embodiment for enhanced results, the hollow spheres comprise a thermal conductivity of 0.04- 0.10 W $m^{-1}$ $K^{-1}$, preferably a thermal conductivity of 0.06- 0.08 W $m^{-1}$ $K^{-1}$.

In one embodiment for improved results the described coating may further comprise a crosslinking agent or an adhesion promoting agent, or mixtures thereof. The crosslinking agent allows, in particular, the enhancement of the coating properties by the formation of chemical bonds between the polymer chains. The bonding agent is intended to increase adhesion between the polymer solution and the ceramic substrate and additionally increase the chemical affinity between the hollow glass microspheres and the polymeric binder.

In one embodiment for enhanced results, the amount of crosslinking agent may range 0.5-15% (v/v), preferably 10% (v/v).

In one embodiment for enhanced results, the amount of adhesion promoting agent may range 0.5-10% (v/v), preferably 5% (v/v).

In one embodiment for enhanced results, the crosslinking agent is a polyisocyanate.

In one embodiment for enhanced results, the adhesion promoting agent is a bifunctional silane.

In one embodiment for enhanced results, the polymer may be selected from a list consisting of: an acrylic polymer or a polyurethane or mixtures thereof.

Another aspect of the present invention relates to a ceramic plate coated with the coating described in particular: a tile, a ceramic, a mosaic, a paving block or a slab.

Therefore, in order to demonstrate the effect of the developed coating polymer solutions have been prepared with and without hollow glass microspheres, which were subsequently applied onto the ceramic coatings by spray technique. The prepared samples were characterized by different experimental methods: empirical testing with a group of volunteers, testing with a thermal imaging camera, water absorption and chemical resistance.

Most of the individuals participating in the empirical tests have agreed with the fact that the ceramic coating surface coated with the polymer solutions doped with hollow glass microspheres present a more thermally pleasant surface compared to the surface of a wood sample.

Ceramic coatings described herein have improved thermal impact, resisted etching from different acids (citric acid, hydrochloric acid) and different bases (potassium hydroxide, ammonium chloride, sodium hypochlorite).

Samples produced had water absorption values below the value indicated by the ceramic industry for the technical porcelain (0.05% (m/m)).

Accordingly, the present ceramic plate with the novel coating may have an appearance similar to wood, improved thermal performance even when compared to wooden plates and may have the strength of a ceramic material.

The polymer solutions described herein are acrylic-based and polyurethane-based. These solutions, in addition to having a low thermal conductivity, also exhibit good chemical resistance and abrasion strength properties. In order to reduce the conductivity of the polymeric solutions, doping thereof with hollow glass microspheres was performed. Hollow microsphere area to volume ratio is significantly lower than that observed for inorganic/organic particles, so the viscosity increase is less when compared to adding the same volume of organic/inorganic particles, thus making the application of polymer solutions doped with glass microspheres possible by spray technique. It should also be noted that the hollow microsphere density is considerably lower than that observed with the organic/inorganic particles, thus providing benefits in terms of final part weight. Microspheres impart good thermal insulation properties to materials due to the inclusion of permanent air "bubbles" throughout the entire polymer matrix.

One of the advantages of the present plate with the polymeric coating, and plate for implementing the coupling element is that it allows obtaining a ceramic plate with higher thermal comfort without a change in the production process thereof and a modification of chemical and mechanical properties thereof being necessary.

Throughout the specification and claims the word "comprising" and variations thereof, are not intend to exclude other technical features, additives, components, or steps. Additional objects, advantages and characteristics of the invention will become apparent to one skilled in the art upon examination of the description or may be learned through practice of the invention. The following examples and drawings are provided by way of illustration and are not intended to be limiting of the present invention. Furthermore, the present invention covers all possible combinations of particular or preferred embodiments herein described.

**Brief Description of the Drawings**

For an easier understanding of the solution, drawings are herein attached, which represent preferred embodiments of the disclosure and which, however, are not intended to limit the scope of the present application.

**Figure 1** shows an embodiment of the inner copper rim, with 4 springs at the four quadrants.

(8) Represents the protrusions;
(9) Represents the conductive segment.

**Figure 2** shows (a) a view of the injected ring with a copper rim (b) an inner view.

**Figure 3** shows an embodiment of the profile view of the connector ring structure.

**Figure 4** shows the structure of the product with a heating element (a) in an exploded view (b) viewed with the connecting rings, wherein

(1) Represents a slab with a heating element in the inside face;
(2) Represents a fixing/connecting ring.
(3) Represents an insulating layer.

**Figure 5** shows a view of the positioning of multiple slabs with connecting rings, with a distribution and control unit.

**Figure 6** shows five embodiments of functional connection models in this product (a) ring, (b) central connector, (c) a half ring for the end wall line (d) square, (e) peripheral connecting ring.

**Figure 7** shows embodiments of the slab structure with heating system, wherein

(1) Represents a ceramic slab,
(4) Represents glue 1,
(5) Represents the printed heating system,
(6) Represents the second glue;
(7) Represents a cork plate.

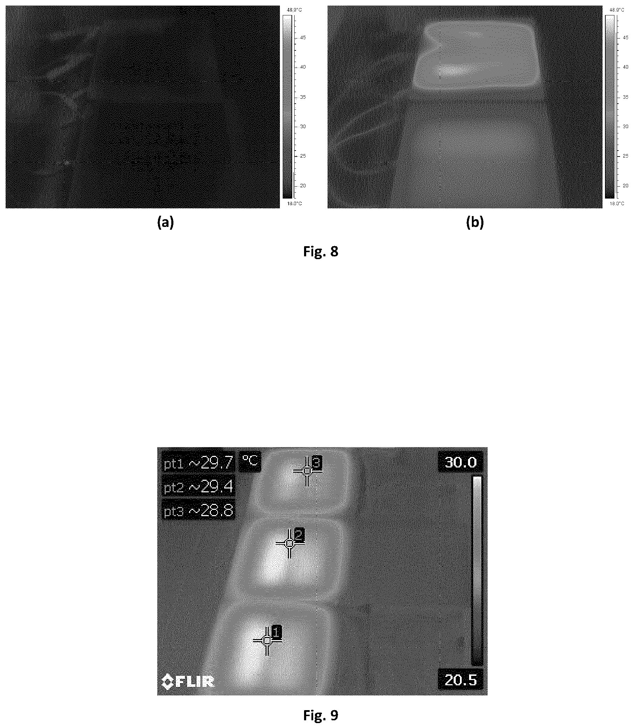

**Figure 8** shows thermographic images taken of slabs 2A and 2B: (a) t = 0min; and (b) after heating, t = 20min.

**Figure 9** shows the thermographic view of a test.

**Figure 10** shows a graph with the results of a cyclic test, with temperature measurement every 15 min.

**Figure 11** shows a picture of the ceramic tiles: (a) Exotic White™, (b) Exotic White™ _ EPS 294 (c) Exotic White™ _ EPS 294_microspheres, (d) Exotic White™ _ BonaMega and (e) Exotic White™ _BonaMega_microspheres.

**Figure 12** shows the results of perception tests with the following samples: Exotic White™, Exotic White™_EPS 294™, Exotic White™_EPS 294™_microspheres and Wood.

**Figure 13** shows the results of perception tests with the following samples: Exotic White™, Exotic White™_BonaMega, Exotic White™_ BonaMega _microspheres and Wood.

**Figure 14** shows the results of perception tests with the following samples: Exotic White™, Exotic White™_EPS 294_microspheres, Exotic White™_ BonaMega _microspheres and Wood.

**Figure 15** shows a table of images of the ceramic coatings after contact.

**Figure 16** shows a table with images of the palm of the hand and ceramic coatings after contact.

## Detailed Description

The present invention relates to ceramic coating plates with printed and encapsulated heating elements interconnected between plates by means of coupling elements, in particular a ring and heating systems, use thereof, in particular in the construction field.

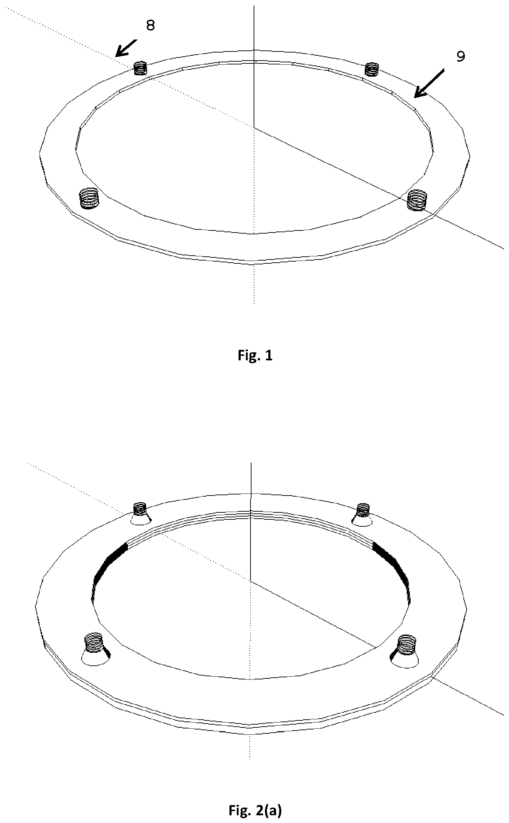

In one embodiment, for the construction of the connecting ring, a copper rim was cut (for example $d_{ext}$: 119 mm; $d_{int}$: 100mm), with welded springs at the four quadrants, as shown in Figure 1.

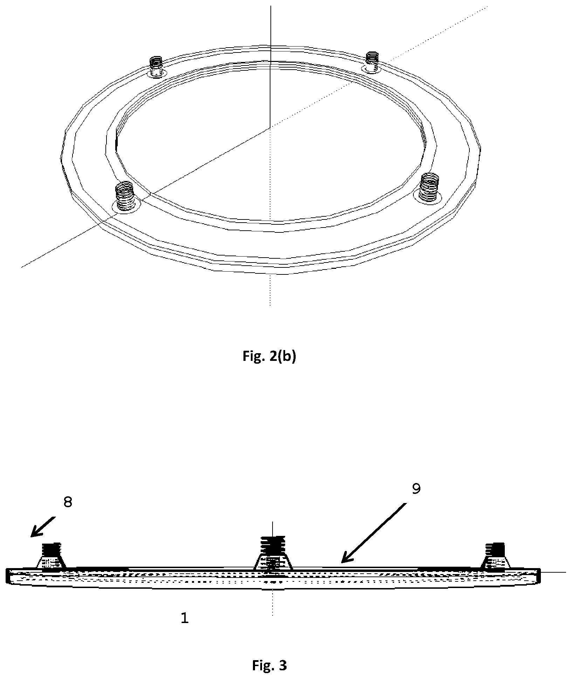

In one embodiment, after preparing the copper rim, and so as to ensure sealing of this connecting element against external threats to the product, such as liquid leakage on the floor, it is coated with polymer (Figure 2), only permitting the exposure of the metal springs that connect under gravity to the bus bars of each heating element in the slab when the latter is placed on the ground.

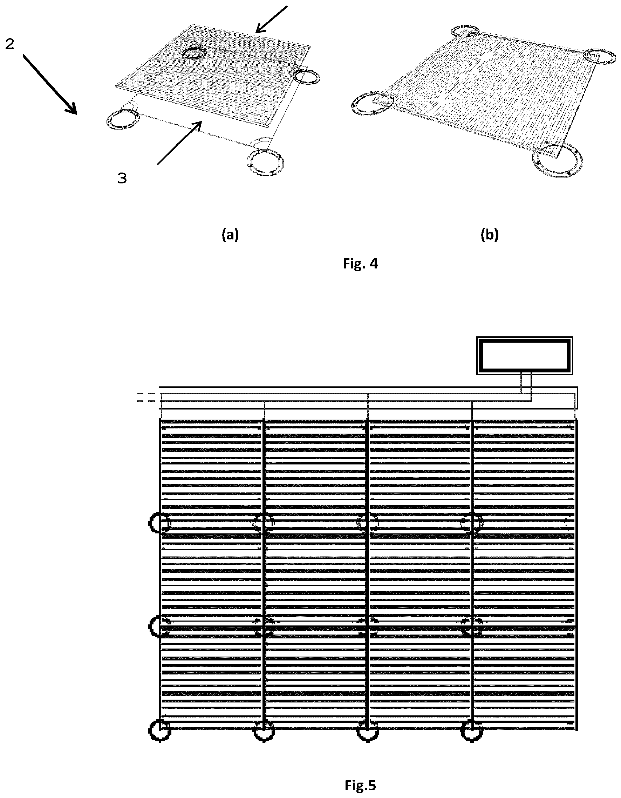

In one embodiment, applying the connecting elements would be consistent as currently presented for ceramic plates for heating purposes. As a differentiating factor, the rings shall contain spring connectors, welded at four opposite points of the circumference, allowing connector-bus bar contact on one side of the slab; and in that sense each slab shall have the position for four fixing rings in these respective vertices (Figure 4). The insulating layer, in addition to containing the cavity related to the volume of ¼ ring contains a hole to access the bus bar terminal of the heating element.

In one embodiment, the power supply may be coupled to the domestic power grid, which is distributed to the floor through a shunting rail or box. In Figure 5 a demonstration scheme is shown.

In one embodiment, other connecting elements should also be designed to permit the slab positioning on the periphery of the assembly areas. In Figure 6 several preferred embodiments of the connecting elements are shown.

In one embodiment, two flexible films where printing was undertaken can be used as heating elements. A film may comprise a polymeric substrate (PET) while the other may comprise a ceramic mesh substrate. Although they possess different characteristics, both were tested under the same conditions for subsequent comparison of results. Table 1 shows the minimum and maximum resistance values after curing of printed inks.

Table 1 - minimum and maximum electrical resistance values in two types of substrate

| Sample | Resistance ($\Omega$) (Min - Max) |
|---|---|
| PET polymeric film (Waterproof feature) | 70-80 |
| Ceramic mesh (Porous feature) | 20-40 |

In one embodiment, in order to test the performance of the strips on a polymeric substrate and on a ceramic mesh, as well as the influence of the adhesive on heat conductivity to the surface of the slab, 3 pairs of tiles were produced, with each pair having the application of the same glue/structure onto the two different substrates, PET (A) and ceramic mesh (B). This description is diagrammed in Figure 7.

In one embodiment, glue 1 may be applied between the slab and the heating strip and glue 2 between the heating strip and the cork plate.

In one embodiment, glue 1 is applied between the heating strip and the slab and glue 1 and 2 are applied between the slab and the cork plate.

In one embodiment, glue 2 is applied between the slab and the heating strip and between the latter and the cork plate.

In one embodiment, after the assembly of the slabs with heating strips and insulating films (cork in this example), these were connected to a power supply. The applied voltage was 24V. Each sample was connected continuously until the temperature began to stabilize, which corresponds to about 20 minutes. An infrared thermal imaging camera monitored the heating, drawing the heating profile and also noting the respective images.

In one embodiment, the results obtained from the evaluation performed, summarized in Table 2, show that the maximum temperature reached in both types of substrates are different. In this case, the slabs with the heating PET strip have reached a maximum temperature of about 30°C, whereas the slabs with the ceramic mesh have reached a maximum temperature significantly higher between 43 and 49 °C. These results are consistent with what had been observed in the heating of individual strips, i.e. without being integrated into slabs.

Table 2 - Maximum temperature reached after 20 minutes of operation with the heating strip connected continuously for each sample

| Sample | 1A | 1B | 2A | 2B | 3A | 3B |
|---|---|---|---|---|---|---|
| TºC $_{máx,}$ | 27.0 | 49.2 | 27.4 | 46.0 | 30.3 | 43.0 |

The discrepancy between the results for the two types of substrates can be explained by the difference observed in the resistance values of the heating circuit for the two substrates. The ceramic mesh, due to its porous nature, during the printing process of inks, requires greater amount of ink so as to obtain a homogeneous printing. Thus, since having a greater amount of such conductive material, the circuit resistance decreases. Thus, although the two substrates are electrical insulators, the ceramic mesh circuit has a lower resistance value than for PET. The heat produced by the heater strips is obtained by the Joule effect, that is, the energy dissipation when an electric current passes through the material. The heat generated by Joule effect depends on the electric current in the material, the strength of the material and the time that the material is subject to electric current. This dependence is shown in equation 1, wherein Q is the heat generated in Joule, I is the electric current in Ampere, R is the electrical resistance in Ohms and t is time in seconds.

$$Q = I^2 R t \qquad (eq.1)$$

Since, by Ohm's law, the current is inversely proportional to the resistance, the smaller the resistance, the greater the current and therefore the heat generated. Thus, within the same operation time and under the same applied voltage, the slabs with circuit on a ceramic mesh substrate reach a higher temperature.

The maximum temperature recorded corresponds to the average value of the surface temperature of an area corresponding to the slab area, however it can be observed through the infrared thermographic images taken that the heating is stronger in the areas of resistors, implying that the heat distribution is not completely uniform.

For the application of adhesives, the difference between glue 1 and glue 2 is not significant, however it is possible to perceive that the non-uniform application of glue layers affects heat distribution, which is observed via thermographic images.

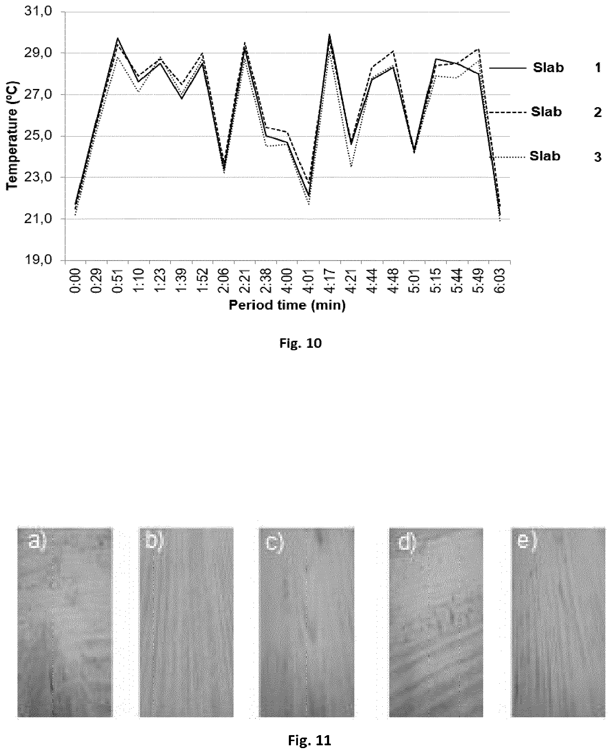

In order to measure the temperature reached at the surface of the slabs, a cyclic on/off test was conducted every 15 minutes for a period of 6 hours. The three slabs were chosen in series on the three bonding tests mentioned above, and with the heating element printed onto a PET substrate in its constitution. Programmed for a voltage on the system of about 24 V and a current of 1.6 A, the results can be analyzed in Figures 10 and 11.

The test conditions in closed room had room T of 18.9 °C and 43.4% humidity. The temperature of the reference slab was 20.4 °C.

The temperature range at the surface of the slabs varied between 23 and 29.5 °C, which are considered as pleasant temperatures for domestic use.

In one embodiment, a connection to the domestic power grid, with a 220 V voltage, can be made having, for this purpose, an electronic circuit board which allows the regulation of the voltage applied as well as a controlled energy management.

The construction of the slabs with heating has adopted a structure presenting several advantages. Heat is generated from the inside face of the slab and driven to the surface which allows the circuitry to be furthest away possible from the user. In order to avoid the circuit being in direct contact with the ground and damaging thereof, an insulating protection was glued underneath the circuit. Since this protection is made of insulating material it prevents the heat from being lost down, thus increasing the system's efficiency, and depending on the material used it may aid in the floor soundproofing. Gluing the several layers could have an influence on the heat distribution and different glues have been studied with different integration structures. No relevant differences between glues were observed, although a good and evenly application of glues is essential for proper heat distribution. The heating uniformity on the slab surface is still not ideal, since the areas immediately above the resistors become hotter than the rest of the slab area; it is necessary to design the heating element with the slab area (outside to outside), an area tolerance up to -2 mm of the slab area being proposed.

From tests performed on samples, different behaviors for heating strips with ceramic mesh or PET were observed. In individual terms, the ceramic mesh is more expensive compared to PET, it is more difficult to handle, tears easily and consumes more time and ink while printing. From this point of view and considering all that has been mentioned above, as well as the supply and production time thereof, together with general know-how for the use thereof in printing techniques, PET is the most appropriate choice. User-desired temperature is achieved by controlling the on-off cycles of the heating strip by means of the control electronic card, associated with a temperature sensor in the vicinity and which will limit the temperature in the floor. Both samples of the heating element heat up above comfort temperature, however, the overall existing thermal barriers either in the slab or in the environment, provide a pleasant sense of touch. The entire system takes the regulatory rules governing the implementation in the market into consideration.

Polymeric coatings described herein were applied to a preferred embodiment of the Exotic range of products since there is an increased interest in these products, which visually have a similar appearance to wood materials, while also having the same thermal comfort obtained with this material type.

In a preferred embodiment, the polymer solutions are:

- acrylic-based and commonly used in this type of coating such as those described by "EPS 294™ from Engineered Polymer Solutions, Product Data Sheet 2014"; or

- polyurethane-based, such as those described by "Bona Mega by Bona™, Product Data Sheet 2009".

In a preferred embodiment, it has been found that the addition of hollow glass microspheres (such as 3M™ Glass Bubbles by 3M) to polymeric coatings allows for improved thermal ceramic plates.

In a preferred embodiment, additives may further be used to improve the performance of the coating obtained, such as a crosslinking agent and an adhesion promoting agent. The crosslinking agent used may be Meikanate TP 10 by Mitsubishi International GmbH consisting of a modified polyisocyanate. The adhesion promoting agent used may be Dow Corning® Z-6040 Silane by Dow Corning, which consists of a silane-based agent for improving adhesion to difficult substrates.

In another embodiment, the polymer solutions described herein (EPS 294 and Bona Mega) may be doped with 10% (m/m) hollow glass microspheres 3M™ Glass Bubbles 10% (V/V) crosslinking agent and 5% (V/V) adhesion promoting agent. The polymer formulations prepared were applied onto the ceramic coating by spray technique, using a pressure of 4 bar. After application of the polymeric coating, the samples were thermally cured at 130 °C for 4 minutes. The pieces were produced with 14.5 x 20 cm dimensions, with an amount of polymeric coating applied to each sample of approximately 1.26g. To determine the potentiating effect of hollow glass microspheres in reducing the thermal conductivity of the polymer solutions, ceramic samples were prepared coated only with polymer solutions, i.e. with no addition of hollow glass microspheres. The procedure used in preparing these samples (with no addition of hollow glass microspheres) was similar to that described above.

The sample prepared with polymer solution EPS 294 and hollow glass microspheres had the designation Exotic White_EPS 294_microspheres. The sample prepared only with polymer solution EPS 294 will be referred to as Exotic White_EPS 294. The sample prepared with polymer solution Bona Mega and hollow glass microspheres will be referred to as Exotic White_BonaMega_microspheres. The sample prepared only with polymer solution Bona Mega will be referred to as Exotic White_BonaMega.

Assessment of thermal comfort to touch

The prepared materials were characterized by assessing the thermal comfort perception/feeling, and quality assessment (blind testing). For accomplishing thereof, a group of volunteers was necessary to assess the difference in terms of thermal comfort to touch, between the ceramic substrates, with and without polymeric coating, and a wood sample. The samples were placed in a temperature-controlled room, with room temperature at 19 °C. Before starting the perception tests, each group of samples was kept at 19 °C for a period of 1 hour, in order to stabilize the temperature thereof.

A group of 10 people (5 men and 5 women), aged between 23 and 38, assessed the thermal comfort to touch feeling/perception by hand contact with test samples, and rated the same according to a pre-defined scale. The score of the test samples was as follows:

(1) Unpleasant thermal comfort feeling/perception;
(2) Intermediate situation (-);
(3) Intermediate situation (+);
(4) Pleasant thermal comfort feeling/perception.

The test described is based on a qualitative assessment, so another test for quantitative assessment of thermal comfort to touch was studied. For such, a thermal imager (ThermaCAM Researcher) was used to determine the thermal profile of the contact surfaces (palm and sample surface), after 1 second and 30 second contact. The samples were placed in a temperature-controlled room, with room temperature at 19 °C. Before starting the tests with thermal imager, each group of samples was kept at 19 °C for a period of 1 hour, in order to stabilize the temperature thereof. Data obtained by the thermal imager were analyzed resorting to ThermalResearcher software.

Water Absorption

The ceramic slabs should provide water absorption values inferior to 0.05% (m/m), this value being determined by the boiling method according to ISO 10545-3. This method consists in determining the water mass absorbed by the sample after being placed in a vessel with boiling water for 4 hours. The percentage is determined based on the mass difference (initial and final) compared to the original sample mass.

Chemical resistance

This test aimed at determining the resistance of ceramic coatings prepared in this work to etching, according to ISO 10545-13. The acidic and basic solutions used in this test and concentrations thereof were the following: ammonium chloride (100 g L$^{-1}$), sodium hypochlorite (20 mg L$^{-1}$), citric acid (100g L$^{-1}$), hydrochloric acid (18% v/v) and potassium hydroxide (100 g L$^{-1}$). Ceramic coatings were in contact with the acidic and basic solutions for 3 days. Upon this period, the chemicals were removed and the surface of the ceramic coatings was washed. A visual analysis was undertaken to assess whether the surface of the samples underwent any change.

Visual Analysis

The ceramic coatings prepared have a slightly rough surface as compared to the original sample (sample Exotic White™), but the differences are hardly visually perceptible, as shown in Figure 11.

Empirical tests

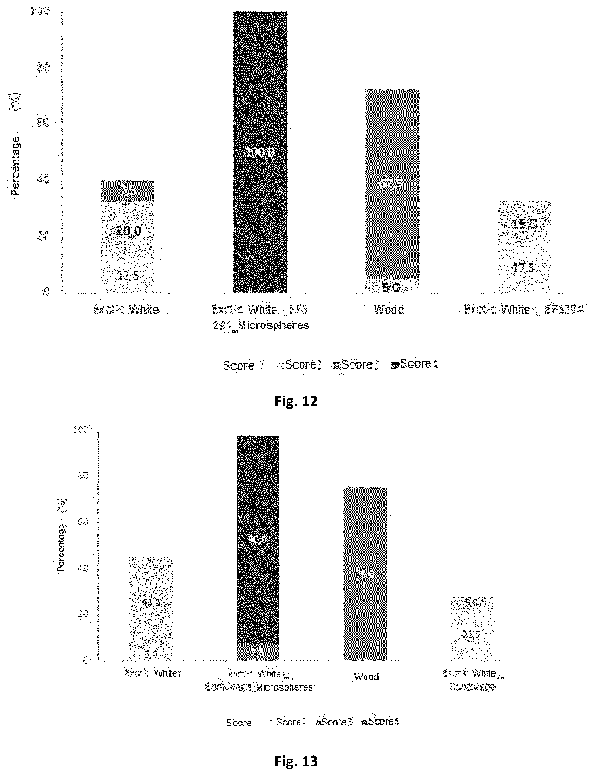

The first perception/feeling tests were performed with samples Exotic White_EPS 294, Exotic White_EPS 294_microspheres, Exotic White™ (conventional sample by Revigrés). Since the aim is to bring the thermal properties of ceramic substrates closer to the properties of wood, an assessment of wood sample performance was also carried out. This test was conducted with the main objective of assessing the need to add hollow glass microspheres to the polymer solutions. Figure 12 shows the overall rating for each sample as well as the weight of each total score value.

From the analysis of the chart in Figure 12, we clearly see that the conventional sample by Revigrés (Exotic White) and sample coated only with polymer solution EPS 294™ (Exotic White_EPS 294) showed the worst performances among the tested samples. From this result it can be concluded that doping the polymer solution EPS 294 with hollow glass microspheres is necessary to obtain thermally comfortable ceramic coatings. The sample with the best performance in this set of samples was Exotic White_ EPS 294_microspheres, since all individuals involved in the test agreed that this sample had a thermally more comfortable surface. For participants in this test, sample Exotic White_ EPS 294_microspheres has a thermally more comfortable surface compared to the wood sample surface.

Figure 13 shows the results obtained during the test with samples: Exotic White, Exotic White_BonaMega, Exotic White_BonaMega_microspheres and a wood sample.

The results shown in Figure 13 are quite similar to those shown in Figure 12, in that samples with worst results were samples Exotic White and the sample prepared only with polymer solution Bona Mega™ (sample Exotic White_BonaMega). Sample Exotic White_BonaMega_microspheres showed the best results: 90% of participants in this test considered the surface of this sample thermally more pleasant compared to other test samples. The wood sample has a worse thermal behavior compared with the sample Exotic White_BonaMega_Microspheres.

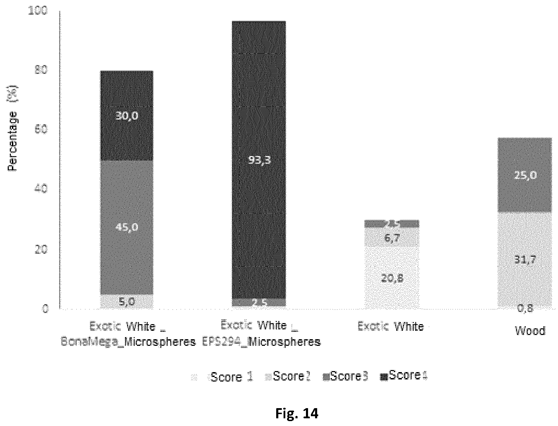

In the performed tests, which are shown in Figures 12 and 13, it has been found that polymeric coatings with no addition of microspheres do not show satisfactory results. The addition of hollow glass microspheres is required to obtain materials with a thermally pleasant surface. A third perception test was performed with a conventional sample by Revigrés, a wood sample and samples coated with the EPS 294 and Bona Mega polymers and embedded hollow glass microspheres. This test had the key objective of assessing which polymer with doped microsphere gives rise to the thermally most pleasant ceramic coating. Figure 14 shows the overall rating for each sample as well as the weight of each total score value.

From the analysis on Figure 14, it becomes clear that the original sample (Exotic White) has the worst performance among the tested samples, given that it has the overall lowest score and most participants considered the thermal comfort perception for this sample as less pleasant (Score 1). The sample with the best performance was Exotic White_EPS 294_microspheres not only due to its overall score, but above all due to the fact that most individuals in the test have rated this sample with full score. None of the individuals have rated the wood sample with full score. From the results shown in Figure 4, one may conclude that the surface of the ceramic coating Exotic White_EPS 294_microspheres is more thermally pleasant as compared to the surface of the wood sample.

Thermal profile

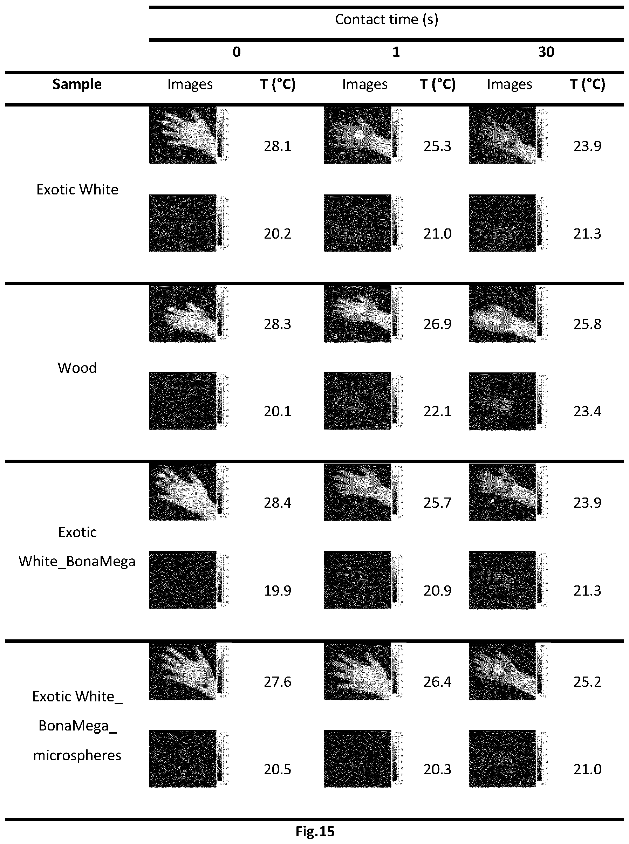

The thermal profile of the contact surfaces (palm and sample surface), after 1 second and 30 second contact was recorded using a thermal imager. Table in Figure 15 depicts the palm images before and after being in contact with samples Exotic White by Revigrés, Wood, Exotic White_EPS 294 by Revigrés and Exotic White_EPS 294_microspheres. For a better analysis of the results, the respective temperature values obtained by averaging fingertip temperatures are presented. Areas on the fingertips have been selected for this analysis, has they are more in contact area with the sample surface and present greater sensitivity to temperature variations. The table in Figure 15 also shows an image of the hand marked on the surface of ceramic coatings after 1 second and 30 second contact. In addition to these data, the table also includes an image of the ceramic coating surface and palm before testing.

From the analysis of the table in Figure 15, it is apparent that the smallest temperature drop of de palm, i.e. heat loss, is less evident in the ceramic coating coated with polymer solution BonaMega™ and doped with hollow glass microspheres. In the case of the original sample, sample Exotic White by Revigrés, the temperature decreases by 2.8 °C upon contact for only 1 second, wherein a difference of 4.2 °C is obtained upon 30 second contact.

It is also observed that sample Exotic White_BonaMega_Microspheres is the ceramic sample with the lowest temperature change in the palm, and this observation reinforces the results of the thermal comfort perception test, wherein this sample was considered one of the most comfortable to Touch.

The smallest temperature drop in the palm was observed with the wood sample, however, the palm temperature decrease after 1 second and 30 second contact with sample Exotic White_BonaMega_microspheres is very close to that observed for the wood sample, for the same contact time.

The wood sample has a highly visible palm mark on the surface thereof after 1 second and 30 second contact. When contact time was 1 second, the average temperature at the fingertip area on the surface of the wood sample was 22.1 °C, meaning that there had been a 2 °C temperature rise over the initial temperature of the sample surface (20.1 ° C); when contact time was 30 seconds, the temperature was 23.4 °C, with an increase of 3.3 ° C. The average temperature at the fingertip area on the surface of sample Exotic White_BonaMega_Microspheres after 30 seconds was 21 ° C, with a mere increase of 0.5 °C, over the initial temperature of the sample surface (20.5 °C). The wood sample absorbs heat from the hand at a larger extent than that observed for this ceramic sample. From these results it may be concluded that glass microspheres are good thermal insulators, not allowing the surface of ceramic coatings to absorb the heat from the hand.

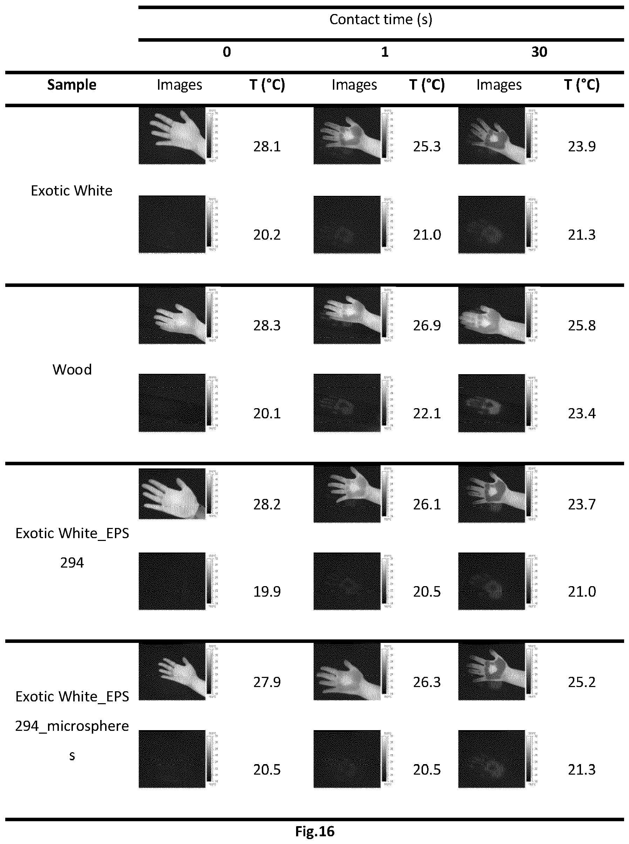

Table in Figure 16 depicts the palm images before and after being in contact with samples Exotic White by Revigrés, Wood, Exotic White_EPS 294 by Revigrés and Exotic White_EPS 294_microspheres. The same table also shows an image of the hand marked on the surface of ceramic coatings after 1 second and 30 second contact.

From the analysis of the table in Figure 16, it is visible that the largest decrease in temperature occurs in the original sample Exotic White by Revigrés for both contact times assessed. This observation is indicative that the sample has higher thermal conductivity values, causing the temperature decrease in the palm during contact.

The sample showing the best result in the thermal comfort perception/feeling tests (Exotic White_EPS 294_microspheres) is not the sample with the smallest temperature drop for the hand after 1 second and 30 second contact, however it is the sample with the lowest increase in temperature on sample surface after the contact period.

Water Absorption

The ceramic coatings prepared underwent the water absorption test by boiling method. According to technical instructions, the technical porcelain must provide water absorption values of less than 0.05%. The water absorption values obtained for samples Exotic White_EPS 294 by Revigrés, Exotic White_BonaMega by Revigrés, Exotic White_EPS 294_Microspheres and Exotic White_BonaMega _microspheres are below the recommended value.

Resistance to acids

This test was performed in accordance with the procedure described above and was conducted with samples Exotic White_EPS 294 by Revigrés, Exotic White_EPS 294_microspheres, Exotic White_BonaMega by Revigrés, Exotic White_BonaMega_microspheres. This test aimed at determining the resistance of samples to etching (according to ISO 10545-13). After removal of the chemicals and the washing of the surface of the different ceramic slabs, it has been found that no surface changes in the areas which came into contact with the acidic and basic solutions occurred.

The following claims further define preferred embodiments.

**Claims**

1. Coupling element for flooring coating plates comprising a ceramic plate, an electric circuit and an insulating substrate with a recess for receiving said coupling element, wherein said element comprises:

     a conductive segment;
     a conductive segment coated with an electrically insulating polymeric material;
     four resilient and conductive protrusions (8) connected to the conductive segment to interconnect two coating plates,
     **characterized by** said coupling element comprises
     an additional conductive element and four resilient and conductive protrusions (8) connected pairwise to said conductive segments for interconnecting four coating plates pairwise;
     and a frustoconical or troncopyramid base for supporting each of the protrusions (8), wherein the base is of the same material as the conductive segment coating.

2. Element according to the preceding claim wherein said element comprises four resilient and conductive protrusions (8) connected to said conductive segment for interconnecting four coating plates.

3. Element according to claims 1-2 wherein the conductive segment has the shape of a ring, strip, half-ring, square, cross, or combinations thereof.

4. Element according to claims 1-3 wherein the resilient and conductive protrusions (8) are metallic, preferably wherein the resilient and conductive protrusions are helical springs, or a retractable metallic pin.

**5.** Element according to any of the previous claims wherein the material of the conductive segment is copper.

**6.** Flooring coating plate comprising a ceramic plate, an electric circuit and an insulating substrate having a recess for receiving a coupling element, according to any of the previous claims, wherein said recess exposes one or more contacts of the electric circuit.

**7.** Coating plate according to the preceding claim wherein the insulating substrate comprises 4 recesses, each one for receiving a coupling element for coupling with the 4 neighboring plates of the coating plate, wherein each recess exposes one or more electric circuit contacts, preferably wherein the 4 recesses are located in the 4 corners of the coating plate.

**8.** Coating plate according to the preceding claim wherein each of the recesses has the shape of a ring quarter whose ends coincide with two sides of the coating plate.

**9.** Coating plate according to any of claims 6-8, wherein the insulating substrate comprises, for each of the electrical contacts exposed by the recess, a recess for receiving an electrically conductive protrusion of said coupling element.

**10.** Coating plate according to the preceding claim wherein the recess is frustoconical.

**11.** Plates according to any one of the preceding claims wherein the plate described in claims 1-10 wherein the polymeric coating comprises at least one polymer and up to 30% (m/m) of hollow glass microspheres with a size inferior to 90 microns.

**12.** Plate according to any of preceding claims 6-11 wherein the plate is a tile, a ceramic, a mosaic, a building block or a slab.

**13.** Heating system comprising

> a coupling element (2) for flooring coating plates according to the preceding claims 1 - 5, and
> two coating plates of flooring according to the preceding claims 6 -12;
> wherein the coupling element interconnects the electrical circuit of said plates, and
> wherein the electrical circuit of said plates is a heating circuit.

**Patentansprüche**

**1.** Kopplungselement für Platten für Bodenbeläge, umfassend eine Keramikplatte, einen Stromkreis und ein isolierendes Substrat mit einer Aussparung zur Aufnahme des genannten Kopplungselements, wobei das genannte Element umfasst:

> ein leitendes Segment;
> ein leitendes Segment, das mit einem elektrisch isolierenden Polymerwerkstoff beschichtet ist;
> vier federnde und leitende Vorsprünge (8), die mit dem leitenden Segment verbunden sind, um zwei Beschichtungsplatten miteinander zu verbinden,
> **dadurch gekennzeichnet, dass** das genannte Kopplungselement umfasst ein zusätzliches leitendes Element und vier federnde und leitende Vorsprünge (8), die paarweise mit den genannten leitenden Segmenten verbunden sind, um vier Beschichtungsplatten paarweise miteinander zu verbinden;
> und eine kegelstumpfförmige oder pyramidenstumpfförmige Basis zum Halten jedes der Vorsprünge (8), wobei die Basis aus dem gleichen Material wie die leitende Segmentbeschichtung besteht.

**2.** Element nach dem vorangehenden Anspruch, wobei das genannte Element vier federnde und leitende Vorsprünge (8) umfasst, die mit dem genannten leitenden Segment verbunden sind, um vier Beschichtungsplatten miteinander zu verbinden.

**3.** Element nach einem der Ansprüche 1-2, wobei das leitende Segment die Form eines Rings, Streifens, Halbrings, Quadrats, Kreuzes oder Kombinationen davon hat.

**4.** Element nach einem der Ansprüche 1-3, wobei die federnden und leitenden Vorsprünge (8) aus Metall sind, wobei die federnden und leitenden Vorsprünge bevorzugt Schraubenfedern oder ein einziehbarer Metallstift sind.

5. Element nach einem der vorangehenden Ansprüche, wobei das Material des leitenden Segments Kupfer ist.

6. Platten für Bodenbeläge, umfassend eine keramische Platte, einen Stromkreis und ein isolierendes Substrat mit einer Aussparung zur Aufnahme eines Kopplungselements nach einem der vorangehenden Ansprüche, wobei die genannte Aussparung einen oder mehrere Kontakte des Stromkreises freilegt.

7. Beschichtungsplatte nach dem vorangehenden Anspruch, wobei das isolierende Substrat 4 Aussparungen aufweist, von denen jede zur Aufnahme eines Kopplungselements zur Kopplung mit den 4 benachbarten Platten der Beschichtungsplatte dient, wobei jede Aussparung einen oder mehrere Kontakte eines Stromkreises freilegt, wobei die 4 Aussparungen bevorzugt in den 4 Ecken der Beschichtungsplatte angeordnet sind.

8. Beschichtungsplatte nach dem vorangehenden Anspruch, wobei jede der Aussparungen die Form eines Viertels eines Rings hat, dessen Enden mit zwei Seiten der Beschichtungsplatte zusammenfallen.

9. Beschichtungsplatte nach einem der Ansprüche 6-8, wobei das isolierende Substrat für jeden der durch die Aussparung freigelegten elektrischen Kontakte eine Aussparung zur Aufnahme eines elektrisch leitenden Vorsprungs des genannten Kopplungselements umfasst.

10. Beschichtungsplatte nach dem vorangehenden Anspruch, wobei die Aussparung kegelstumpfförmig ist.

11. Platten nach einem der vorangehenden Ansprüche, wobei die in den Ansprüchen 1-10 beschriebene Platte, wobei die polymere Beschichtung mindestens ein Polymer und bis zu 30 % (m/m) hohle Mikrokugeln aus Glas mit einer Größe von weniger als 90 Mikron umfasst.

12. Platte nach einem der vorangehenden Ansprüche 6-11, wobei die Platte eine Fliese, eine Keramik, ein Mosaik, ein Baustein oder eine Platte ist.

13. Heizsystem, umfassend

ein Kopplungselement (2) für Beschichtungsplatten für Bodenbeläge nach einem der vorangehenden Ansprüche 1 - 5, und zwei Beschichtungsplatten für Bodenbeläge nach einem der vorangehenden Ansprüche 6 - 12; wobei das Kopplungselement den Stromkreis der genannten Platten miteinander verbindet, und wobei der Stromkreis der genannten Platten ein Heizkreis ist.

## Revendications

1. Élément d'accouplement pour des plaques de revêtement de plancher comprenant une plaque céramique, un circuit électrique et un substrat isolant avec un renfoncement pour recevoir ledit élément d'accouplement, dans lequel ledit élément comprend :

un segment conducteur;
un segment conducteur revêtu d'un matériau polymère électriquement isolant ;
quatre protubérances résistantes et conductrices (8) connectées au segment conducteur pour interconnecter les deux plaques de revêtement,
**caractérisé en ce que** ledit élément d'accouplement comprend
un élément conducteur supplémentaire et quatre protubérances résistantes et conductrices (8) connectées par paires audits segments conducteurs pour interconnecter quatre plaques de revêtement par paires ;
et une base tronconique ou tronco-pyramidale pour soutenir chacune des protubérances (8), dans laquelle la base est faite du même matériau que le revêtement de segment conducteur.

2. Élément selon la revendication précédente dans lequel ledit élément comprend quatre protubérances résistantes et conductrices (8) connectées audit segment conducteur pour interconnecter quatre plaques de revêtement.

3. Élément selon les revendications 1-2 dans lequel le segment conducteur est en forme d'anneau, de bande, de demi-anneau, de carré, de croix, ou des combinaisons de ceux-ci.

**4.** Élément selon les revendications 1-3 dans lequel les protubérances résistantes et conductrices (8) sont métalliques, préférablement dans lequel les protubérances résistantes et conductrices sont des ressorts hélicoïdaux, ou une broche métallique rétractable.

**5.** Élément selon l'une quelconque des revendications précédentes dans lequel le matériau du segment conducteur est le cuivre.

**6.** Plaque de revêtement de plancher comprenant une plaque céramique, un circuit électrique et un substrat isolant disposant d'un renfoncement pour recevoir un élément d'accouplement, selon l'une quelconque des revendications précédentes, dans lequel ledit renfoncement expose un ou plusieurs contacts du circuit électrique.

**7.** Plaque de revêtement selon la revendication précédente dans laquelle le substrat isolant comprend 4 renfoncements, pour recevoir chacun un élément d'accouplement pour être accouplé aux 4 plaques voisines de la plaque de revêtement, dans laquelle chaque renfoncement expose un ou plusieurs contacts de circuit électrique, préférablement dans laquelle les 4 renfoncements sont situés dans les 4 coins de la plaque de revêtement.

**8.** Plaque de revêtement selon la revendication précédente dans laquelle chacun des renfoncements a la forme d'un quart d'anneau dont les extrémités coïncident avec deux côtés de la plaque de revêtement.

**9.** Plaque de revêtement selon l'une quelconque des revendications 6-8, dans laquelle le substrat isolant comprend, pour chacun des contacts électriques exposés par le renfoncement, un renfoncement pour recevoir une protubérance électriquement conductrice dudit élément d'accouplement.

**10.** Plaque de revêtement selon la revendication précédente dans laquelle le renfoncement est tronconique.

**11.** Plaques selon l'une quelconque des revendications précédentes dans lesquelles la plaque décrite dans les revendications 1-10 dans laquelle le revêtement polymère comprend au moins un polymère et jusqu'à 30% (m/m) de microsphères en verre creuses d'une taille inférieure à 90 microns.

**12.** Plaque selon l'une quelconque des revendications précédentes 6-11 dans laquelle la plaque est un carreau, une céramique, une mosaïque, un bloc de construction ou une dalle.

**13.** Système de chauffage comprenant

un élément d'accouplement (2) pour les plaques de revêtement de plancher selon les revendications précédentes 1-5, et deux plaques de revêtement de plancher selon les revendications précédentes 6-12 ; dans lequel l'élément d'accouplement interconnecte le circuit électrique desdites plaques, et dans lequel le circuit électrique desdites plaques est un circuit de chauffage.

**Fig. 1**

**Fig. 2(a)**

**Fig. 2(b)**

8

9

1

**Fig. 3**

2

3

(a)

(b)

Fig. 4

Fig.5

(a)                  (b)                  (c)

(d)                  (e)

Fig. 6

**1A | 1B**

1

4

5

6

7

Fig. 7

(a)                                         (b)

**Fig. 8**

**Fig. 9**

Fig. 10

Fig. 11

**Fig. 12**

**Fig. 13**

Fig. 14

| Sample | Contact time (s) | | | | | |
|---|---|---|---|---|---|---|
| | 0 | | 1 | | 30 | |
| | Images | T (°C) | Images | T (°C) | Images | T (°C) |
| Exotic White | | 28.1 | | 25.3 | | 23.9 |
| | | 20.2 | | 21.0 | | 21.3 |
| Wood | | 28.3 | | 26.9 | | 25.8 |
| | | 20.1 | | 22.1 | | 23.4 |
| Exotic White_BonaMega | | 28.4 | | 25.7 | | 23.9 |
| | | 19.9 | | 20.9 | | 21.3 |
| Exotic White_ BonaMega_ microspheres | | 27.6 | | 26.4 | | 25.2 |
| | | 20.5 | | 20.3 | | 21.0 |

**Fig.15**

| | Contact time (s) | | | | | |
|---|---|---|---|---|---|---|
| | 0 | | 1 | | 30 | |
| Sample | Images | T (°C) | Images | T (°C) | Images | T (°C) |
| Exotic White | | 28.1 | | 25.3 | | 23.9 |
| | | 20.2 | | 21.0 | | 21.3 |
| Wood | | 28.3 | | 26.9 | | 25.8 |
| | | 20.1 | | 22.1 | | 23.4 |
| Exotic White_EPS 294 | | 28.2 | | 26.1 | | 23.7 |
| | | 19.9 | | 20.5 | | 21.0 |
| Exotic White_EPS 294_microspheres | | 27.9 | | 26.3 | | 25.2 |
| | | 20.5 | | 20.5 | | 21.3 |

**Fig.16**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007100181 A1
- US 8306408 B
- US 8461486 B2
- EP 1427255 A2
- CN 203320899 U
- US 20120090812 A
- US 20040170806 A
- US 20110012054 A1
- US 2014001170 A1
- DE 102006041775 A1
- US 2012168427 A1
- WO 2014122419 A2
- GB 1457869 A
- US 2008039552 A1